# EUROPÄISCHE PATENTSCHRIFT

(11) **EP 3 012 141 B1**
(45) Veröffentlichungstag und Bekanntmachung des Hinweises auf die Patenterteilung: **07.02.2018**
(21) Anmeldenummer: 15002293.7
(22) Anmeldetag: 01.08.2015
(51) Int. Cl.: B60K 7/00

(54) **HYDRAULISCHER RADANTRIEB FÜR EIN KRAFTFAHRZEUG UND VERFAHREN ZU DESSEN BETRIEB**
HYDRAULIC WHEEL DRIVE FOR A MOTOR VEHICLE AND METHOD FOR OPERATING THE SAME
ENTRAINEMENT DE ROUE HYDRAULIQUE POUR UN VEHICULE AUTOMOBILE ET SON PROCEDE DE FONCTIONNEMENT

(30) Priorität: 24.10.2014 DE 102014015809
(43) Veröffentlichungstag der Anmeldung: 27.04.2016
(73) Patentinhaber: MAN Truck & Bus AG, 80995 München (DE)
(72) Erfinder: Resch, Franz-Georg, 82299 Türkenfeld (DE); Ittlinger, Reinhard, 94363 Oberschneiding (DE); Füchsle, Ludwig, 85305 Jetzendorf (DE); Reiter, Thomas, 84174 Eching (DE)
(74) Vertreter: v. Bezold & Partner Patentanwälte - PartG mbB

(56) Entgegenhaltungen:
- WO-A1-2011/128556
- DE-A1- 2 623 757
- DE-A1-102011 013 769
- DE-U1- 29 924 730
- FR-A1- 2 998 225

## Beschreibung

Die Erfindung betrifft einen hydraulischen Radantrieb für ein Kraftfahrzeug, insbesondere für Nutzfahrzeuge, und besonders bevorzugt für Lastkraftwagen oder Omnibusse. Weiterhin wird ein Betriebsverfahren für solche Kraftfahrzeuge angegeben.

Für viele Anwendungszwecke ist es notwendig oder zumindest sinnvoll, mit einem Kraftfahrzeug sowohl im Off-Road-Bereich als auch im On-Road-Bereich zu agieren. Der Off-Road-Bereich kennzeichnet sich insbesondere durch unbefestigte Wege, wie sie üblicherweise auf Baustellen oder im Wald vorkommen. Der so genannte On-Road-Bereich kennzeichnet sich insbesondere durch asphaltierte Straßen, insbesondere für den Fernverkehr. Im Off-Road-Bereich entstehen häufig Situationen, in denen das Kraftfahrzeug aufgrund des lockeren Untergrunds mit einem insbesondere einachsigen Antrieb, wie er für On-Road-Fahrzeuge üblich ist, keine genügende Traktion aufbauen kann und steckenbleibt. Zu diesem Zweck sind bekannte Off-Road-Fahrzeuge z. B. mit einem mechanischen Allradantrieb ausgerüstet, der in der Regel eine primäre mechanische Antriebseinheit umfasst. Eine solche Antriebseinheit (Bspw. Triebstrang) ist in der Regel hinter dem Motor angeordnet, das heißt in Richtung des Leistungsflusses bzw. Kraftübertagung nachgeschaltet. Diese Antriebseinheit umfasst zumindest Schaltgetriebe, Gelenkwellen und mechanisch angetriebenen Achsen und überträgt die vom Motor erzeugte mechanische Leistung auf die Achsen beziehungsweise Räder eines Fahrzeugs.

Das Dokument DE 26 23 757 A1 beschreibt eine Antriebseinheit für einzelne Räder. Ein Hydraulikmotor ist an einem Achsschenkel angeordnet. Um die axiale Abmessung der Antriebseinheit auf ein Minimum herabzusetzen, ist eine Zahnradanordnung zur Übertragung von Antriebskräften vom Hydraulikmotor auf eine Radnabe innerhalb eines äußeren Endes des Achsschenkels angeordnet.

Das Dokument FR 2 998 225 A1 beschreibt eine Antriebsanordnung, die von außen schwenkbar an einem Fahrzeugrad zur Erzeugung eines Antriebs- oder Bremsmoments angekoppelt wird. Hydraulikleitungen oder elektrische Leitungen werden durch den äußeren Schwenkarm geführt, so dass keine Leitungen bei Wartungsarbeiten getrennt werden müssen.

Das Dokument DE 10 2011 013 769 A1 beschreibt einen herkömmlichen Radialkolbenantrieb an den Vorderrädern eines Lastkraftwagens. Der Versorgungsdruck des Vorderradantriebs wird in Abhängigkeit der Drehzahl der durch einen Verbrennungsmotor angetriebenen Hinterräder geregelt zur Synchronisation der Raddrehzahlen.

Das Dokument DE 299 24 730 U1 beschreibt eine Antriebseinrichtung für ein Nutzfahrzeug. Ein Verbrennungsmotor treibt eine Speisepumpe und eine Hydropumpe mechanisch an. Hydrostatische Einzelradantriebe sind mit der Hydropumpe treibbar verbunden.

Hiervon ausgehend liegt der vorliegenden Erfindung die Aufgabe zugrunde, eine Möglichkeit zu schaffen, ein Kraftfahrzeug für den Betrieb sowohl im Off-Road-Bereich als auch im On-Road-Bereich einzurichten. Die Aufgabe wird durch die Merkmale der unabhängigen Patentansprüche gelöst. Vorteilhafte Weiterbildungen sind Gegenstand der abhängigen Patentansprüche.

Die Erfindung betrifft eine Vorrichtung für einen hydraulischen Radantrieb eines Kraftfahrzeugs, welche zumindest umfasst:
- einen Radflansch;
- einen Achsschenkel; und
- einen hydraulischen Drehkolben-Radantrieb, eingerichtet und konzipiert zur Einleitung und Aufnahme eines Drehmoments zum Radflansch, wobei ein Wirkeingriff des Drehkolben-Radantriebs zuschaltbar und entkoppelbar ausgeführt ist.

Der hydraulische Drehkolben-Radantrieb dient der Fortbewegung des Kraftfahrzeugs bzw. der Unterstützung eines mechanischen Antriebssystems. Hierbei werden die Räder durch einen von einer Pumpe erzeugten Flüssigkeitsdruck zur Rotation gebracht. Die erfindungsgemäßen Fahrzeuge können somit zwei Antriebseinheiten aufweisen. Das Kraftfahrzeug kann neben der primären mechanischen Antriebseinheit eine weitere Antriebseinheit zum hydrostatischen Antreiben eines Rads, beziehungsweise einer Radachse aufweisen.

Das Kraftfahrzeug ist besonders bevorzugt ein zum Straßenverkehr zugelassenes Kraftfahrzeug zur Güterbeförderung z.B. eine Zugmaschine für einen Sattelauflieger oder ein Lastkraftwagen, der wahlweise einen Anhänger ziehen kann. Es kann aber auch der Personenbeförderung (Beispielsweise ein Omnibus) dienen. Das Kraftfahrzeug hat bevorzugt eine maximale Geschwindigkeit, die zumindest größer oder gleich 60 km/h (Kilometer pro Stunde) beträgt. Von der vorliegenden Erfindung sind nicht umfasst Fahrzeuge mit einer maximalen Geschwindigkeit von weniger als 60 km/h, beispielsweise Flurförderfahrzeuge (Bagger) oder Traktoren.

Das Kraftfahrzeug weist eine Mehrzahl von Rädern auf, die über einen Radflansch antreibbar sind. Der Radflansch kann bspw. mit einer den Reifen tragenden Felge verschraubt oder auch einstückig mit der Felge ausgeführt sein. Das Rad bzw. der Radflansch ist an einem Achsschenkel angeordnet, auf dem der Fahrzeugaufbau aufgebracht ist. Der Achsschenkel kann dabei um einen sogenannten Achsschenkelbolzen drehbar und somit lenkbar angeordnet sein. Die erfindungsgemäße Vorrichtung weist weiterhin einen Drehkolben-Radantrieb auf, über den ein Drehmoment auf den Radflansch übertragbar ist. Das Drehmoment, welches durch den Drehkolben-Radantrieb erzeugt wird, entsteht durch das Einleiten der hydraulischen Flüssigkeit unter Druck in den Drehkolben-Radantrieb. Der Drehkolben-Radantrieb umfasst eine Kammer, in der sich der Kolben mit einer Drehmoment abgebenden Welle dreht. Dabei kann der Drehkolben-Radantrieb ferner einen rotierenden Kolben und einen innerhalb eines Gehäuses angeordneten, nach außen abgedichteten Außenring umfassen. Zwischen dem Kolben und der Kammer ist eine Druckkammer gebildet, über die durch Einleiten und Abführen der hydraulischen Flüssigkeit ein umlaufendes Druckfeld erzeugt wird, das den Kolben in Rotation versetzt. Hierbei wird das abgebbare Drehmoment über den zugeführten Druck und die Drehzahl über den Volumenstrom der Flüssigkeit bestimmt. Über das Schluckvolumen, welches über die Größe der Druckkammer konstruktiv bestimmt wird, kann die erreichbare Raddrehzahl und das Raddrehmoment auf den Anwendungsfall abgestimmt werden.

In einer vorteilhaften Ausführungsform der Vorrichtung ist der Drehkolben-Radantrieb nach dem Prinzip eines Gerollers ausgestaltet.

Ein Geroller kann ein hydraulischer Drehkolbenantrieb sein, bei dem sich ein beweglicher ringförmiger Drehkolben mit einer Außenverzahnungsgeometrie in einem feststehenden Außenring orbitierend bewegt. Der Außenring weist selbst eine Innenverzahnung auf, auf der der Kolben abrollen bzw. gleiten kann. Die Innenverzahnung des Außenrings kann beispielsweise einen Zahn mehr als die Außenverzahnung des Drehkolbens aufweisen, so dass sich in dem jeweils entstehenden Freiraum eine Druckkammer bilden kann. Das Zentrum des Kolbens kann sich auf einer Kreisbahn konzentrisch zum Zentrum der Kammer bewegen, wobei der Drehkolben einseitig an der Kammerwand anliegt und diese dadurch abdichten kann. Der innenverzahnte Außenring kann dabei still stehen und die hydraulische Druckflüssigkeit in die Druckkammern über einen Ölstromverteiler (Schieberventil) gesteuert eingeleitet werden. Der Drehkolben kann über die Verzahnung exzentrisch abrollen. Bei einem Geroller kann ein Teil der Geometrie des Außenrings durch hydrodynamisch gelagerte Rollen gebildet werden, die bei der Drehbewegung des Drehkolbens im Berührpunkt mitlaufen können. Hierdurch kann durch die verringerte Reibung zwischen den bewegten Teilen die Effizienz gegenüber einer starren Innengeometrie gesteigert und die hydraulischen Spaltverluste aufgrund der Anlage der Teile aneinander minimiert werden. Das durch das umlaufende Druckfeld erzeugte Drehmoment und die Drehzahl können über eine kurze Kardanwelle auf eine zentrisch rotierende Abtriebswelle übertragen werden. Die zentrisch rotierende Abtriebswelle kann mit einem Radflansch koppelbar verbunden sein. Ein solcher Radantrieb kann je nach Druckbeaufschlagung sowohl in Vorwärts- als auch in Rückwärtsfahrt betrieben werden.

Beim Zuschalten des beschriebenen Drehkolben-Radantrieb aus dem entkoppelten Zustand heraus ist es besonders vorteilhaft, dass hierbei kein Einschaltstoß - z.B. wie bei einem Radialkolbenantrieb mit Rollen, die aus dem Freilaufzustand auf die Rollenbahn zur Aktivierung des Antriebs auftreffen - stattfindet, sondern eine sanfte Einleitung des Drehmoments erfolgt. Dies dient zur Komfortsteigerung durch Geräuschverminderung und einer Entlastung der mechanischen Komponenten vor Stoßbelastungen.

Auch ein übermäßiges Beschleunigen des Radflanschs bzw. des angeschlossenen Rads kann durch diese Wirkgeometrie des Drehkolbenantriebes unterbunden werden. Damit kann die Drehzahl und das übertragene Drehmoment präzise an die Untergrundbedingungen angepasst werden.

Wenn der Drehkolben-Radantrieb entkoppelt ist, wird er bei einer Bewegung des Radflanschs nicht mehr mitgeführt. Das heißt, die beweglichen Komponenten stehen still und es wird eine weitaus geringere Menge der hydraulische Flüssigkeit in dem Drehkolben-Radantrieb durchgesetzt als es bei einem eingekoppelten Antriebssystem der Fall ist.

Das Entkoppeln bzw. Zuschalten des Wirkeingriffs des Drehkolben-Radantriebs kann hydraulisch, mechanisch und/oder magnetisch durchgeführt werden. In einer möglichen Variante kann eine formschlüssige Zuschaltung, z.B. durch axial verschiebbare Stifte oder eine Stirnverzahnung, erfolgen. Ein mechanisches oder hydraulisches System kann nach Art einer konventionellen Reibkupplung aufgebaut sein. In dieser weiteren Variante wird beim Zuschalten ein Reibbelag gegen eine korrespondierende Fläche gedrückt. Bei einem elektromagnetischen Zuschalten wird über ein zu- und abschaltbares Magnetfeld entweder eine Fläche verpresst, ein formschlüssiger Körper, z.B. ein Stift, bewegt oder eine magnetorheologische Flüssigkeit verfestigt, so dass ein Wirkeingriff realisiert wird.

Die vorgeschlagene Vorrichtung hat den Vorteil, dass sie eingekoppelten Zustand im Off-Road-Bereich eingesetzt werden kann, wobei sie entkoppelten Zustand eine nur geringe Verlustleistung induziert.

Aufgrund der möglichen Entkoppelbarkeit des Drehkolben-Radantriebs verschleißt dieser weniger und verhindert so ein Liegenbleiben des gesamten Kraftfahrzeugs, wenn der Drehkolbenmotor bspw. aufgrund eines Defekts nicht mehr drehbar ist. Darüber hinaus stellt der entkoppelte Drehkolben-Radantrieb keine mitrotierende Masse dar, so dass der Kraftstoffverbrauch eines solchen Kraftfahrzeugs vergleichbar ist mit einem Kraftfahrzeug, in welchem die erfindungsgemäße Vorrichtung nicht montiert ist.

In einer vorteilhaften Ausführungsform der Vorrichtung ist der Drehkolben-Radantrieb mit dem Radflansch verbunden und relativ zu einer Radaufhängung bzw. zur Längsachse des Kraftfahrzeugs verschwenkbar.

In einer besonders vorteilhaften Ausführungsform der Vorrichtung ist der Drehkolben-Radantrieb mit dem Radflansch verbunden und relativ zu einer Starrachse des Kraftfahrzeugs verschwenkbar.

Dabei kann der Drehkolben-Radantrieb in das Radteil einer luft- oder blattgefederten Starrachse des Kraftfahrzeugs zur Güterbeförderung integriert sein. Dabei ist der im Radteil der Starrachse integrierte Drehkolben-Radantrieb relativ zur Starrachse verschwenkbar. Der Radflansch kann zum Lenken des Kraftfahrzeugs eingerichtet sein. Als Radteil im Sinne der vorliegenden Erfindung sind die um eine Lenkachse (Mitte Achsschenkelbolzen) schwenkbaren Bauteile zu sehen, welche die Funktion der Radlagerung, Aufnahme von Bremssystemen, Lenkhebeln und die Führung von Rad-/ Reifen übernehmen. Komponenten des Radteils sind in der Regel Radnaben, Radlager, Achsschenkel (Achsstummel), Lenk- und Spurhebel, Radbremseinheiten (Trommel- oder Scheibenbremsen).

Zur Erzeugung eines Drehmoments bzw. zur Aufnahme eines Drehmoments in dem Radflansch können flexible Hydraulikleitungen zum verschwenkbaren Radflansch mit dem Drehkolben-Radantrieb geführt werden.

Es ist möglich, den beschriebenen Antrieb auch in das Radteil eines pro Rad am Chassis einzeln aufgehängten Achsschenkels zu integrieren, z.B. bei einer Doppelquerlenkerachse. Auch die Zufuhr der hydraulischen Druckflüssigkeit über eine mechanische Drehversorgung an der Schwenkachse ist dabei möglich. Die geringe Baugröße, das geringe Gewicht und die einfache Versorgung des Drehkolben-Radantriebs erlauben eine besonders vorteilhafte Verwendung bei lenkbaren Achsen des Fahrzeugs, bei der die für Nutzfahrzeuge übliche Achslasten, Spurweiten und Lenkgeometrien erhalten bleiben können.

In einer weiteren vorteilhaften Ausführungsform der Vorrichtung ist der Drehkolben-Radantrieb mit dem Radflansch übersetzungsfrei verbunden. Bei Vorrichtungen zur Erzeugung des erforderlichen Radantriebsdrehmoments bei einer geringen Drehzahl des Rades können (Drehmoment-) Übersetzungen bzw. Untersetzungen als mechanischer Mittentrieb oder Außenplanetensatz am Rad als notwendig erachtet. Bei der hier vorgeschlagenen Vorrichtung ist der Einsatz einer Übersetzung bzw. Untersetzung nicht erforderlich. Insbesondere kann der Drehkolben-Radantrieb unmittelbar mit dem Radflansch verbunden werden, wobei ein konventionelles Scheibenrad verwendet werden kann. Durch die verwendeten Raddurchmesser bei Lastkraftwagen wird ein geeignetes Drehmoment-Drehzahl-Profil erreicht. Hierdurch werden die Baugröße und die Komplexität des Drehkolben-Radantriebs sehr gering gehalten. Ferner kann durch die geeignete Wahl des Raddurchmessers eines Kraftfahrzeugs ein geeignetes Verhältnis zwischen Drehmoment und Drehzahl erreicht werden, welche auf den Drehkolben-Radantrieb wirken.

In einer weiteren vorteilhaften Ausführungsform der Vorrichtung ist eine hydraulische Flüssigkeit über den Achsschenkel zuführbar und abführbar. Durch das Zuführen bzw. Abführen einer hydraulischen Flüssigkeit über den Achsschenkel wird in vorteilhafter Weise ein vorhandenes Bauteil verwendet, so dass eine Umkonstruktion eines konventionellen Kraftfahrzeugs nicht notwendig ist. Insbesondere können konventionelle On-Road-Kraftfahrzeuge mit geringem Aufwand mit dieser Vorrichtung nachgerüstet werden.

In einem weiteren Aspekt wird ein Verfahren zum Betrieb eines Kraftfahrzeugs im Zusammenhang mit der erfindungsgemäßen Vorrichtung vorgeschlagen, wobei der Drehkolben-Radantrieb zum Bremsen und Beschleunigen aktiviert wird. Demnach kann der Drehkolben-Radantrieb sowohl ein Drehmoment erzeugen als auch ein Drehmoment aufnehmen.

Beim Bremsen kann der hydrostatische Drehkolben-Radantrieb ein von außen über das Rad wirkendes Drehmoment aufnehmen. Durch diese Drehmoment-Aufnahme kann der Radflansch bzw. das angeschlossene Rad abgebremst werden. Dadurch ist die regenerative Nutzung von Bremsenergie möglichen, da der Drehkolben-Radantrieb dabei als Pumpe für eine Flüssigkeit, insbesondere die Hydraulikflüssigkeit, verwendet bzw. betrieben werden kann. Dabei kann der hydraulische Druck auch für eine elektrische Generatoreinheit verwendet werden, die z. B. zum Aufladen der Fahrzeugbatterie verwendet werden kann. Zusätzlich oder alternativ kann auch ein Druckspeicher für die hydraulische Flüssigkeit aufgefüllt werden.

Beim Beschleunigen durch den Drehkolben-Radantrieb ist es besonders vorteilhaft, dass hierbei keine ruckartige Drehbewegung erzeugt wird, sondern eine sanfte Einleitung des Drehmoments stattfindet. Eine ruckartige Drehbewegung des angeschlossenen Rads kann unterbunden werden, indem der Drehkolben-Radantrieb zu hohe Drehzahlen abbremst. In dem Drehkolben-Radantrieb ist ein Drehkolben angeordnet, welcher über die hydraulische Flüssigkeit orbitierend bewegt wird. Dabei gleitet der Drehkolben relativ zu einem Außenring, der zu dem konzentrisch zum Rotationszentrum des Rades angeordnet ist und mit diesem fest verbunden sein kann. Durch die gleitende Relativbewegung zwischen Drehkolben und Außenring kann eine ruckartige Drehbewegung vermieden werden. Damit kann die Drehzahl und das übertragene Drehmoment präzise an die Untergrundbedingungen angepasst werden. Um ruckartige Bewegungen zu vermeiden kann der Flüssigkeitsstrom in einer geeigneten bzw. ansteuerbaren Weise gedrosselt werden. Dabei wird ähnlich wie in Endlagendämpfungen bei Hydraulikkolben, der Fluidstrom vor Erreichen der Endlage gedrosselt, um ein sanftes Anfahren der Kolben in den Endlagen zu ermöglichen, bevor Zylinder und Kolben hart aneinanderschlagen. Ebenso können z.B. Gas-Speicherelemente (hydraulische Druckspeicher) verwendet werden, um die ruckartigen Bewegungsänderungen zu reduzieren.

In einer weiteren vorteilhaften Ausführungsform des Verfahrens ist der Drehkolben-Radantrieb zur Rückgewinnung von Bremsenergie verwendbar. Dabei kann der Drehkolben-Radantrieb als Pumpe für die hydraulische Flüssigkeit wirken.

Somit kann der Drehkolben-Radantrieb ebenfalls mit umgekehrtem Kraftfluss als Pumpe für eine Flüssigkeit verwendet bzw. betrieben werden. Wird also ein Drehmoment von außen, z. B. über das Rad, auf den Drehkolben-Radantrieb übertragen, so wird die hydraulische Flüssigkeit unter Erzeugung eines Drucks nach Art einer Pumpe gefördert. Damit entsteht ein Moment, welches dem Drehmoment von außen entgegenwirkt und so das Rad abbremst. Mit diesem erzeugten hydraulischen Druck können auch weitere hydraulische Elemente betrieben werden.

Des Weiteren kann der Radflansch bzw. das angeschlossene Rad mit einer fest mit dem Radflansch verbundenen Bremseinrichtung, z. B. einer pneumatisch oder hydraulisch betätigbaren Scheiben- oder Trommelbremse ausgestattet sein. Dadurch können die gesetzlichen Bestimmungen für die Zulassung eines solchen Fahrzeugs für den Straßenverkehr erfüllt werden.

In einer weiteren vorteilhaften Ausführungsform des Verfahrens kann der Drehkolben-Radantrieb in Abhängigkeit der Geschwindigkeit des Kraftfahrzeugs entkoppelt werden. Der Drehkolben-Radantrieb manuell jederzeit oder selbsttätig in Abhängigkeit der Geschwindigkeit zugeschaltet bzw. entkoppelt werden. Wird die Grenzgeschwindigkeit unterschritten, so kann bei entsprechendem Fahrbahnuntergrund ein Festfahren des Kraftfahrzeugs auftreten. Durch das Zuschalten des Drehkolben-Radantriebs werden ein Drehmoment und eine drehzahloptimierte Kraftübertragung auf dem Untergrund erreicht. Wird die Grenzgeschwindigkeit überschritten, so ist ein Festfahren des Kraftfahrzeugs unwahrscheinlich und die Zuschaltung des Drehkolben-Radantriebs kann aufgehoben werden. Dem selbsttätigen Entkoppeln kann manuell entgegengewirkt werden, wenn dies für besondere Einsatzzwecke des Kraftfahrzeugs zweckdienlich ist. Durch dieses Verfahren wird der Kraftstoffverbrauch des Kraftfahrzeugs ohne die Notwendigkeit der Aktivierung durch den Fahrzeugführer so gering wie möglich gehalten. Vorteilhaft ist hierbei auch, wenn bei einem Unterschreiten der Grenzgeschwindigkeit der Drehkolben-Radantrieb selbsttätig wieder zugeschaltet wird. Die Verwendung eines solchen Verfahrens ist insbesondere auf großräumigen Off-Road-Bereichen mit Abschnitten vorteilhaft, die ähnlich wie ein On-Road-Bereich befahrbar sind.

In einem weiteren Aspekt der Erfindung wird die Verwendung der Vorrichtung für Kraftfahrzeuge mit einer maximalen Geschwindigkeit, die größer oder gleich 60 km/h beträgt, vorgeschlagen. Bei Kraftfahrzeugen, die eine maximale Geschwindigkeit aufweisen, die größer oder gleich 60 km/h beträgt, ist die unmittelbare bzw. unverzögerte Bremswirkung, die durch einen Drehkolben-Radantrieb erzeugbar ist, zumindest für eine gesetzliche Zulassung nach ECE-Richtlinie (Economic Commission for Europe-Richtlinie) nicht ausreichend. Auch sind die erreichbaren Geschwindigkeiten durch den Antrieb mit einem Drehkolben-Radantrieb für Geschwindigkeiten von zumindest 60 km/h nicht erreichbar. Für diese Zwecke ist es besonders vorteilhaft, die vorgeschlagene Vorrichtung zu verwenden, weil diese die Vorteile der Geländegängigkeit mit den Vorteilen eines insbesondere einachsig angetriebenen Kraftfahrzeugs im On-Road-Bereich verbindet.

In einem weiteren Aspekt der Erfindung ist ein Kraftfahrzeug beschrieben, welches für den Off-Road-Betrieb sowie für On-Road-Betrieb bei Geschwindigkeiten bis mindestens 60 Kilometer pro Stunde eingerichtet ist, wobei in mindestens zwei Rädern ein hydraulischer Drehkolben-Radantrieb angeordnet ist, welcher während der Fahrt zuschaltbar und entkoppelbar ist.

Die in den Patentansprüchen einzeln aufgeführten Merkmale sind in beliebiger, technologisch sinnvoller, Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- ***Fig. 1*:**: eine Vorrichtung mit einem Drehkolben-Radantrieb angeordnet in einem Rad im Schnitt,
- ***Fig. 2*:**: eine Vorrichtung mit einem Drehkolben-Radantrieb in einer Lenkachse in Draufsicht,
- ***Fig. 3*:**: einen Drehkolbenantrieb (Geroller) im Schnitt,
- ***Fig. 4*:**: ein Kraftfahrzeug mit einem hydraulischen Radantrieb.

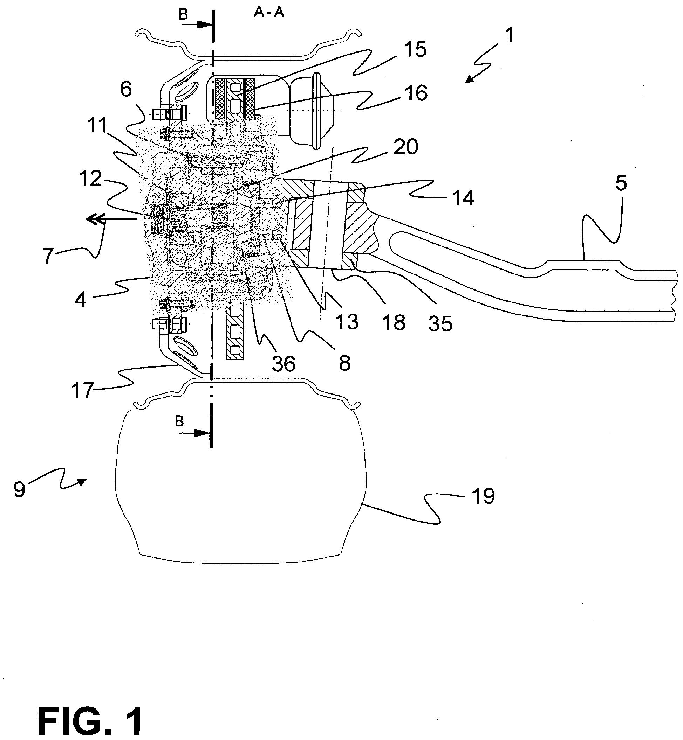

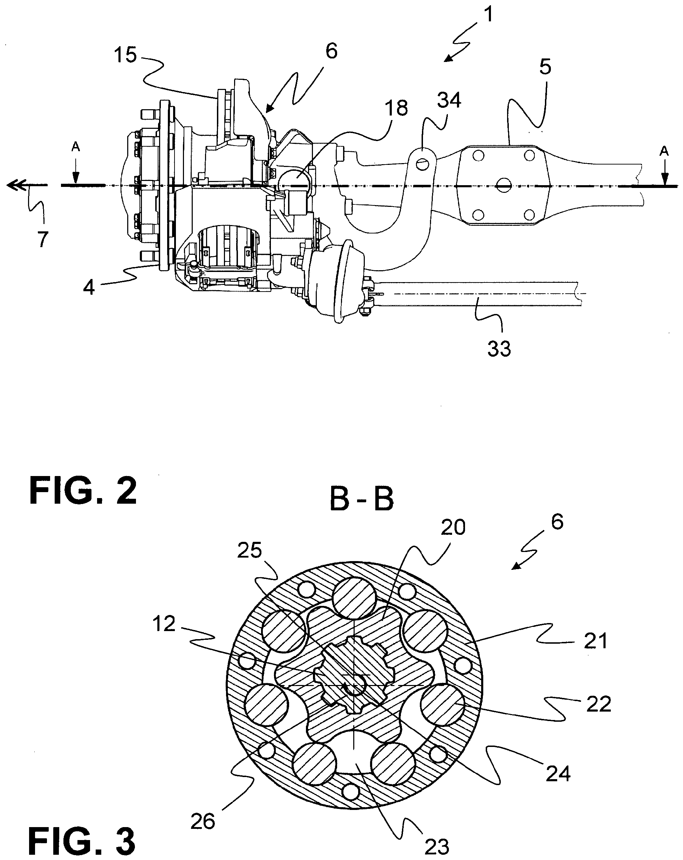

***Fig.1*** zeigt die Vorrichtung 1 mit einem Drehkolben-Radantrieb 6 im Schnitt, welche in einem Radflansch 4 angeordnet ist. Der Drehkolben-Radantrieb 6 ist über einen Achsschenkelbolzen 18 verschwenkbar mit der Starrachse 5 verbunden. Auf der Starrachse 5 ist der Fahrzeugaufbau (hier nicht dargestellt) über eine Fahrwerksanbindung mit einer Luft- oder Blattfederung anordenbar. In dem Drehkolben-Radantrieb 6 ist ein Drehkolben 20 angeordnet, welcher über die hydraulische Flüssigkeit 8 orbitierend bewegt wird. Die hydraulische Flüssigkeit 8 wird über die Zuleitung 13 zugeführt und über den Rücklauf 14 abgeführt. Der Drehkolben 20 ist über eine kurze Kardanwelle 12 oder eine ähnlich wirkende Einheit zur Momentenübertragung mit einer Kupplung 11 verbunden. Hier dargestellt ist die Kupplung 11 eine hydraulisch betätigte Kupplung. Wenn die Kupplung 11 mit dem Radflansch 4 verbunden wird, wird ein durch den Drehkolben 20 erzeugtes Drehmoment 7 auf den Radflansch übertragen. Der Radflansch 4 ist mit dem Scheibenrad 17 verbunden, welches zusammen mit dem Reifen 19 das Rad 9 bildet. Der Radflansch 4 ist weiterhin fest mit einer Bremse verbunden, die hier exemplarisch als Scheibenbremse mit einer Bremsscheibe 15 und Bremsbelägen 16 dargestellt ist. Eine Ausführung mit einer Trommelbremse wäre ebenfalls denkbar. ***Fig. 1*** ist eine Darstellung der Schnittebene A -A wie sie in Fig. 2 definiert ist. Weiterhin wird in ***Fig.*** 1 gezeigt, in welcher Schnittebene die Darstellung der **Fig. 3** liegt (B -B).

In ***Fig. 2*** wird die Anordnung der Vorrichtung 1 in Draufsicht gezeigt und die Lage der Schnittansicht der Darstellung in ***Fig. 1*** definiert (A - A). Der Drehkolben-Radantrieb 6 ist schwenkbar über den Achsschenkelbolzen 18 mit der Starrachse 5 verbunden und über eine Spurstange 33 und einen Lenkhebel (dargestellt ist ein Sichelhebel) 34 lenkbar. Gegenüberliegend ist der Drehkolben-Radantrieb 6 mit dem Radflansch 4 verbunden, so dass ein Drehmoment 7 auf ein nicht dargestelltes Rad 9, bzw. ein Scheibenrad 17, übertragbar ist.

Der Drehkolben-Radantrieb 6 ist von einer Bremsscheibe 15 umgeben dargestellt, die für den Betrieb eines Kraftfahrzeugs 3 (nicht dargestellt) eingerichtet ist. Das Kraftfahrzeug kann zur Personen- oder Güterbeförderung mit einer zulässigen Höchstgeschwindigkeit größer 60 km/h ausgebildet sein.

In ***Fig. 3*** wird ein Drehkolben-Radantrieb 6 im Schnitt gezeigt. Die Lage des Schnitts ist in der ***Fig. 1*** durch B - B gezeigt. Konzentrisch zu dem Rotationszentrum 24 ist ein Außenring 21 angeordnet, der dazu eingerichtet ist, die Rollen 22 aufzunehmen. Die Rollen 22 sind hydrodynamisch in dem Außenring 21 gelagert und bilden einen Teil der Innengeometrie des Außenrings 21. Exzentrisch zum Rotationszentrum 24 ist der Drehkolben 20 mit dem Drehkolbenzentrum 25 angeordnet. Der Drehkolben 20 ist formschlüssig mit der Kardanwelle 12 verbunden. Zwischen dem Drehkolben 20 und dem Außenring 21 wird durch die Geometrie des Drehkolbens 20 und des Außenrings 21 jeweils eine umlaufende volumenveränderliche Kammer 23 gebildet, in der durch die in der hydraulischen Flüssigkeit 8 entstehenden Druckverteilung der Drehkolben 20 entlang der Kreisbahn 26 konzentrisch zu dem Rotationszentrum 24 bewegt wird.

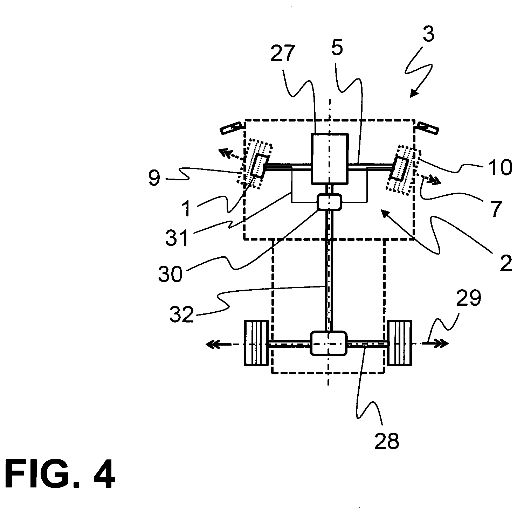

***Fig. 4*** zeigt ein Kraftfahrzeug 3 mit einem hydraulischen Radantrieb 2. Der hydraulische Radantrieb 2 umfasst die Vorrichtung 1, welche vollständig jeweils in der Hüllgeometrie des linken Rades 9 und des rechten Rades 10 aufgenommen ist. Das linke Rad 9 und das rechte Rad 10 sind über die Starrachse 5 mit dem Kraftfahrzeug 3 verbunden. In diesem Beispiel ist eine Antriebseinheit 27 gezeigt, die über eine konventionelle Abtriebswelle 32 eine Abtriebsachse 28 antreibt und ein Abtriebsmoment 29 abgibt. In dem gezeigten Beispiel wird eine Pumpe 30 ebenfalls von der Abtriebswelle 32 angetrieben und der erzeugte Druck über die Leitungen 31 in die Vorrichtung 1 übertragen. Hierdurch wird das zuschaltbare bzw. entkoppelbare Drehmoment 7 über das linke Rad 9 und das rechte Rad 10 übertragen. Der Abtrieb über die Abtriebsachse 28 ist ggf. auch während des Betriebs der Vorrichtung 1 abschaltbar.

Mit der vorliegenden Erfindung wird erreicht, dass das Fahrzeug im Off-Road-Bereich unwegsame Strecken überwinden kann, wobei die erfindungsgemäße Vorrichtung im On-Road-Bereich abgeschaltet werden kann. Darüber hinaus kann die Vorrichtung zur Bremskraftrückgewinnung zugeschaltet werden.

### Bezugszeichenliste

- 1: Vorrichtung
- 2: Radantrieb
- 3: Kraftfahrzeug
- 4: Radflansch
- 5: Starrachse
- 6: Drehkolben-Radantrieb
- 7: Drehmoment
- 8: hydraulische Flüssigkeit
- 9: linkes Rad
- 10: rechtes Rad
- 11: Kupplung
- 12: Kardanwelle
- 13: Zuleitung
- 14: Rücklauf
- 15: Bremsscheibe
- 16: Bremsbelag
- 17: Scheibenrad
- 18: Achsschenkelbolzen
- 19: Reifen
- 20: Drehkolben
- 21: Außenring
- 22: Rollen
- 23: Kammer
- 24: Rotationszentrum
- 25: Drehkolbenzentrum
- 26: Kreisbahn
- 27: Antriebseinheit
- 28: Abtriebsachse
- 29: Abtriebsmoment
- 30: Pumpe
- 31: Leitung
- 32: Abtriebswelle
- 33: Spurstange
- 34: Lenkhebel (als Sichelhebel dargestellt)
- 35: Achsschenkel
- 36: Ölstromverteiler

## Patentansprüche

1. Vorrichtung (1) für einen hydraulischen Radantrieb (2) eines Kraftfahrzeugs (3), zumindest umfassend:
- einen Radflansch (4);
- einen Achsschenkel (35); und
- einen Drehkolben-Radantrieb (6), wobei ein Wirkeingriff des Drehkolben-Radantriebs (6) zuschaltbar und entkoppelbar ausgeführt ist,
**dadurch gekennzeichnet, dass** der Drehkolben-Radantrieb (6) eingerichtet und konzipiert ist zur Einleitung und Aufnahme eines Drehmoments (7) zum Radflansch (4), wobei der Drehkolben-Radantrieb (6) mit dem Radflansch (4) übersetzungsfrei verbunden ist.

2. Vorrichtung (1) nach Anspruch 1, wobei der Drehkolben-Radantrieb (6) nach dem Prinzip eines Gerollers gestaltet ist.

3. Vorrichtung (1) nach Anspruch 1 oder 2, wobei der Drehkolben-Radantrieb (6) mit dem Radflansch (4) verbunden und zu einer Starrachse (5) des Kraftfahrzeugs (3) verschwenkbar ist.

4. Vorrichtung (1) nach einem der vorhergehenden Ansprüche, wobei eine hydraulische Flüssigkeit (8) über den Achsschenkel (35) zuführbar und abführbar ist.

5. Verfahren zum Betrieb eines Kraftfahrzeugs (3) mit einer Vorrichtung (1) nach einem der Ansprüche 1 bis 4, wobei der Drehkolben-Radantrieb (6) zum Bremsen und Beschleunigen aktiviert wird.

6. Verfahren nach Anspruch 5, wobei der Drehkolben-Radantrieb (6) zur Rückgewinnung von Bremsenergie eingesetzt wird, wobei der Drehkolben-Radantrieb (6) als Pumpe für die hydraulische Flüssigkeit (8) wirkt.

7. Verfahren nach Anspruch 5 oder 6, wobei der Drehkolben-Radantrieb (6) in Abhängigkeit der Geschwindigkeit des Kraftfahrzeugs (3) entkoppelt wird.

8. Verwendung der Vorrichtung (1) nach einem der Ansprüche 1 bis 4 oder des Verfahrens nach einem der Ansprüche 5 bis 7 bei einem Kraftfahrzeug mit einer Bremsgeschwindigkeit von zumindest 60 Kilometern pro Stunde.

9. Kraftfahrzeug (3), eingerichtet für den Off-Road-Betrieb sowie für den On-Road-Betrieb bei Geschwindigkeiten bis mindestens 60 Kilometer pro Stunde, wobei in mindestens zwei Rädern (9, 10) ein hydraulischer Drehkolben-Radantrieb (6) nach einem der Ansprüche 1 bis 4, angeordnet ist, welcher während der Fahrt zuschaltbar und entkoppelbar ist.

## Claims

1. A device (1) for a hydraulic wheel drive (2) of a motor vehicle (3), comprising at least:
- a wheel flange (4);
- a stub axle (35); and
- a rotary piston wheel drive (6), wherein an active intervention of the rotary piston wheel drive (6) is designed to be able to be engaged and decoupled,
**characterized in that** the rotary piston wheel drive (6) is configured and designed to introduce and receive a torque (7) at the wheel flange (4), wherein the rotary piston wheel drive (6) is connected to the wheel flange (4) without a translation ratio.

2. The device (1) according to Claim 1, wherein the rotary piston wheel drive (6) is configured on the principle of a roller system.

3. The device (1) according to Claim 1 or 2, wherein the rotary piston wheel drive (6) is connected to the wheel flange (4) and can pivot relative to a rigid axle (5) of the motor vehicle (3).

4. The device (1) according to any of the preceding claims, wherein a hydraulic fluid (8) can be supplied and discharged via the stub axle (35).

5. A method for operating a motor vehicle (3) with a device (1) according to any of Claims 1 to 4, wherein the rotary piston wheel drive (6) is activated for braking and acceleration.

6. The method according to Claim 5, wherein the rotary piston wheel drive (6) is used to recover braking energy, wherein the rotary piston wheel drive (6) acts as a pump for the hydraulic fluid (8) .

7. The method according to Claim 5 or 6, wherein the rotary piston wheel drive (6) is decoupled as a function of the speed of the motor vehicle (3).

8. A use of the device (1) according to any of Claims 1 to 4 or the method according to any of Claims 5 to 7 in a motor vehicle with a braking speed of at least 60 kph.

9. A motor vehicle (3) configured for off-road operation and for on-road operation at speeds of at least 60 kph, wherein a hydraulic rotary piston wheel drive (6) according to any of Claims 1 to 4 is arranged in at least two wheels (9, 10) and can be engaged and decoupled during travel.

## Revendications

1. Dispositif (1) pour un entraînement de roue hydraulique (2) d'un véhicule automobile (3), comprenant au moins:
- un flasque de roue (4);
- une fusée d'essieu (35); et
- un entraînement de roue à piston rotatif (6), dans lequel un engagement actif de l'entraînement de roue à piston rotatif (6) peut être couplé et découplé,
**caractérisé en ce que** l'entraînement de roue à piston rotatif (6) est réalisé et conçu en vue de l'introduction et de la réception d'un couple de rotation (7) dans le flasque de roue (4), dans lequel l'entraînement de roue à piston rotatif (6) est relié sans démultiplication au flasque de roue (4).

2. Dispositif (1) selon la revendication 1, dans lequel l'entraînement de roue à piston rotatif (6) est configuré selon le principe d'un moteur Geroller.

3. Dispositif (1) selon la revendication 1 ou 2, dans lequel l'entraînement de roue à piston rotatif (6) est relié au flasque de roue (4) et peut pivoter par rapport à un essieu rigide (5) du véhicule automobile (3) .

4. Dispositif (1) selon l'une quelconque des revendications précédentes, dans lequel un liquide hydraulique (8) peut être amené et évacué par la fusée d'essieu (35).

5. Procédé de fonctionnement d'un véhicule automobile (3) avec un dispositif (1) selon l'une quelconque des revendications 1 à 4, dans lequel on active l'entraînement de roue à piston rotatif (6) pour le freinage et l'accélération.

6. Procédé selon la revendication 5, dans lequel on utilise l'entraînement de roue à piston rotatif (6) pour la récupération d'énergie de freinage, dans lequel l'entraînement de roue à piston rotatif (6) agit comme pompe pour le liquide hydraulique (8).

7. Procédé selon la revendication 5 ou 6, dans lequel on découple l'entraînement de roue à piston rotatif (6) en fonction de la vitesse du véhicule automobile (3).

8. Utilisation du dispositif (1) selon l'une quelconque des revendications 1 à 4 ou du procédé selon l'une quelconque des revendications 5 à 7 dans un véhicule automobile avec une vitesse de freinage d'au moins 60 kilomètres par heure.

9. Véhicule automobile (3), conçu pour la circulation tout terrain ainsi que pour la circulation sur route à des vitesses atteignant au moins 60 kilomètres par heure, dans lequel disposé un entraînement de roue hydraulique à piston rotatif (6) selon l'une quelconque des revendications 1 à 4, qui peut être couplé et découplé pendant le roulage, est disposé dans au moins deux roues (9, 10).
